# EUROPEAN PATENT APPLICATION

(11) **EP 4 425 639 A1**
(43) Date of publication of application: **04.09.2024**
(21) Application number: 21969339.7
(22) Date of filing: 28.12.2021
(51) Int. Cl.: H01M 10/42, H01M 10/44, B60L 58/12, B60L 58/10, B60R 16/033, H02J 7/00, H02M 3/02

(54) **BATTERY SYSTEM CHARGING AND DISCHARGING METHOD AND APPARATUS, BATTERY SYSTEM, AND ELECTRIC VEHICLE**

(71) Applicant: Contemporary Amperex Technology Co., Limited, Ningde, Fujian 352100 (CN)
(72) Inventor: ZUO, Xiyang, Ningde, Fujian 352100 (CN); WANG, Xiao, Ningde, Fujian 352100 (CN); LI, Xiangtao, Ningde, Fujian 352100 (CN); LI, Bao, Ningde, Fujian 352100 (CN)
(74) Representative: Gong, Jinping
(86) International application number: PCT/CN2021/142094
(87) International publication number: WO 2023/122960

(57) **Abstract**

The present application provides a method and a device for charging and discharging a battery system, the battery system and an electric vehicle. The battery system includes a low-voltage battery and a high-voltage battery, the high-voltage battery and the low-voltage battery are both configured to be connected with a load. The method for charging and discharging the battery system includes steps of obtaining a first power of the load when the load is in operation; obtaining a first SOC value of the low-voltage battery and a second SOC value of the high-voltage battery; and controlling charge-and-discharge processes of the high-voltage battery and the low-voltage battery according to the first power, the first SOC value and the second SOC value. Through the above method, the risk of over-discharging of the high-voltage battery and the low-voltage battery can be reduced, and the service life of the high-voltage battery and the low-voltage battery can be prolonged.

## Description

### TECHNICAL FIELD

The present application relates to the field of batteries, and in particular, to a method and a device for charging and discharging a battery system, the battery system and an electric vehicle.

### BACKGROUND

Lithium-ion batteries, due to the advantages of high monomer voltage, large specific energy, and long cycle life, have been widely used in fields such as electric vehicles, consumer electronics, and energy storage systems. Among them, lithium-ion batteries in the electric vehicle generally include low-voltage batteries and high-voltage batteries.

Currently, an electric vehicle generally includes low-voltage loads and high-voltage loads. In the electric vehicle, the low-voltage loads may be powered by the high-voltage battery after being stepped down, or may be directly powered by the low-voltage battery. Moreover, in related arts, an output mode of competitive power supply is usually adopted to supply power to the low-voltage loads, that is, a comparison of a voltage of the high-voltage battery after being stepped down and a voltage provided by the low-voltage battery is performed, and the one having a higher voltage is selected to supply power to the low-voltage loads.

However, for this power supply mode, both the high-voltage battery and the low-voltage battery are at a risk of being damaged due to over-discharge.

### SUMMARY

The present application aims to provide a method and a device for charging and discharging a battery system, the battery system and an electric vehicle, which can reduce the risk of over-discharging of the high-voltage battery and the low-voltage battery, and prolong the service life of the high-voltage battery and the low-voltage battery.

To achieve the above objective, in accordance with a first aspect, the present application provides a method for charging and discharging a battery system. The battery system includes a low-voltage battery and a high-voltage battery. The high-voltage battery and the low-voltage battery are both configured to be connected with a load. The method includes steps of: obtaining a first power of the load when the load is in operation; obtaining a first SOC value of the low-voltage battery and a second SOC value of the high-voltage battery; and controlling charge-and-discharge processes of the high-voltage battery and the low-voltage battery according to the first power, the first SOC value and the second SOC value.

On the one hand, through a real-time detection on the first SOC value of the low-voltage battery and the second SOC value of the high-voltage battery, current statuses of the low-voltage battery and the high-voltage battery can be obtained in real time. The charge-and-discharge processes of the high-voltage battery and the low-voltage battery can be controlled according to the current statuses of the low-voltage battery and the high-voltage battery, which is conducive to avoiding the risk of overcharging or over-discharging of the high-voltage battery and the low-voltage battery, thereby prolonging the service life of the high-voltage battery and the low-voltage battery. On the other hand, through a further consideration on the first power required for the load to operate, the battery that meets the requirement of the load can be selected according to the current statuses of the low-voltage battery and the high-voltage battery, thereby improving the stability of the load operation and enabling the performances of the low-voltage battery and the high-voltage battery to be more fully-utilized. In case that the battery system is applied to an electric vehicle, then it is beneficial to increase the available power of the low-voltage battery and the high-voltage battery, so as to improve the endurance of the vehicle.

In an optional manner, the step of controlling the charge-and-discharge processes of the high-voltage battery and the low-voltage battery according to the first power, the first SOC value and the second SOC value includes that the high-voltage battery is controlled to discharge for the load, or alternatively, the high-voltage battery and the low-voltage battery are controlled to discharge simultaneously for the load, if a maximum power output by the low-voltage battery is smaller than the first power.

In case that the maximum power output by the low-voltage battery is smaller than the first power, the power supply for the load should be switched to the high-voltage battery, or the high-voltage battery and the low-voltage battery are both controlled to supply power to the load simultaneously, so as to ensure that the load can obtain the required voltage and current for a normal operation, which is conducive to improving the stability of the load during operation.

In an optional manner, when the high-voltage battery and the low-voltage battery are controlled to discharge for the load simultaneously, and if the first SOC value is smaller than or equal to the first SOC threshold, then the low-voltage battery is controlled to stop discharging for the load.

During a discharge process of the low-voltage battery, the low-voltage battery should be controlled to stop discharging upon detecting that the first SOC value of the low-voltage battery is smaller than the first SOC threshold, to reduce the risk of over-discharging of the low-voltage battery, thereby enabling a protection for the low-voltage battery which is beneficial to prolong the service life of the low-voltage battery.

In an optional manner, the step of controlling the charge-and-discharge processes of the high-voltage battery and the low-voltage battery according to the first power, the first SOC value and the second SOC value includes step of: controlling the low-voltage battery to discharge for the load if a maximum power output by the low-voltage battery is greater than or equal to the first power; and controlling the charge-and-discharge processes of the high-voltage battery and the low-voltage battery according to the first SOC value and the second SOC value.

When the maximum power output by the low-voltage battery is greater than or equal to the first power, if the low-voltage battery can meet the power-supply requirement of the load, then the low-voltage battery should be controlled to supply power for the load. At this time, the low-voltage battery is enabled to operate in a platform area, and a voltage variation of the low-voltage battery is relatively slow, that is, the voltage of the low-voltage battery is in a relatively stable state, so that the operation of the load is also more stable.

In an optional manner, the step of controlling the charge-and-discharge processes of the high-voltage battery and the low-voltage battery according to the first SOC value and the second SOC value includes a step of controlling the low-voltage battery to discharge for the load if the first SOC value is greater than a second SOC threshold and the first SOC value is smaller than or equal to a third SOC threshold.

By setting the second SOC value and the third SOC value accordingly, the abnormality of over-discharge or overcharge of the low-voltage battery can be avoided when the first SOC value is greater than the second SOC value and smaller than or equal to the third SOC value. In this case, the low-voltage battery can be used to supply power for the load, and the stability and efficiency of an entire power supply process are higher. In addition, the low-voltage battery can be maintained in a state of shallow charge and shallow discharge by keeping the first SOC value being greater than the second SOC value and smaller than or equal to the third SOC value, which is also beneficial to prolong the service life of the low-voltage battery.

In an optional manner, the step of controlling the charge-and-discharge processes of the high-voltage battery and the low-voltage battery according to the first SOC value and the second SOC value also includes steps of: controlling the high-voltage battery to discharge for the load if the first SOC value is smaller than or equal to the second SOC threshold, and the second SOC value is greater than a fourth SOC threshold; and controlling the high-voltage battery to charge the low-voltage battery until a SOC value of the low-voltage battery reaches the third SOC threshold.

When the first SOC value is smaller than or equal to the second SOC threshold, a discharge process of the low-voltage battery should be stopped, so as to avoid abnormal over-discharge of the low-voltage battery. At this time, if the second SOC value is greater than the fourth SOC threshold, the high-voltage battery has sufficient power, and the high-voltage battery can be controlled to supply power for the load and to charge the low-voltage battery, which not only ensures the normal operation of the load, but also can charge the low-voltage battery in time for subsequent uses.

In an optional manner, the step of controlling the charge-and-discharge processes of the high-voltage battery and the low-voltage battery according to the first SOC value and the second SOC value also includes a step of outputting a prompt for charging the high-voltage battery and the low-voltage battery if the first SOC value is smaller than or equal to the second SOC threshold and the second SOC value is smaller than or equal to the fourth SOC threshold.

In this case, both the low-voltage battery and the high-voltage battery have the risk of being over-discharged. At this time, the prompt for charging the high-voltage battery and the low-voltage battery should be output while stopping the output of electric energy of the low-voltage battery and the high-voltage battery, so that the user can take corresponding measures in time. Thereby, an abnormal situation of damage caused by the user's misuse of the low-voltage battery or high-voltage battery when the low-voltage battery and the high-voltage battery are insufficient can be avoided, which can further reduce the risk of over-discharging of the high-voltage battery and the low-voltage battery, and prolong the service life of the high-voltage battery and the low-voltage battery.

In an optional manner, the method also includes a step of controlling the low-voltage battery to discharge for the load if a high-voltage power-down signal is received.

At any moment, if a high-voltage power-down signal is received, the load can be powered by a low-voltage battery. If the battery system is applied to an electric vehicle, in this case, the low-voltage battery can supply power to the load, to enable the electric vehicle to avoid obstacles during operation or drive to a safe place waiting for a rescue, thus the safety and convenience of the electric vehicle are improved.

In an optional manner, the battery system also includes a bidirectional DC/DC module, and the bidirectional DC/DC module is connected with the high-voltage battery and the low-voltage battery respectively, and the method also includes a step of: controlling the bidirectional DC/DC module to enable the high-voltage battery to charge the low-voltage battery, or enable the low-voltage battery to charge the high-voltage battery, or enable the high-voltage battery to discharge for the load.

By arranging the bidirectional DC/DC module, multiple different power transmission processes can be realized, including a process of charging the low-voltage battery by the high-voltage battery, a process of charging the high-voltage battery by the low-voltage battery, and a process of discharging for the load by the high-voltage battery. Then, the power transmission process can be flexibly selected according to the current statuses of the low-voltage battery, the high-voltage battery and the load, to enable the low-voltage battery and the high-voltage battery to remain at a better state, which is beneficial to prolong the service life of the low-voltage battery and the high-voltage battery.

In accordance with a second aspect, the present application provides a device for charging and discharging a battery system. The battery system includes a low-voltage battery and a high-voltage battery. The high-voltage battery and the low-voltage battery are both configured to be connected with a load. The device includes a power acquisition unit, a SOC value acquisition unit, and a charge-and-discharge controller. The power acquisition unit is configured to obtain a first power of the load when the load is in operation. The SOC value acquisition unit is configured to obtain a first SOC value of the low-voltage battery and a second SOC value of the high-voltage battery. The charge-and-discharge controller is configured to control charge-and-discharge processes of the high-voltage battery and the low-voltage battery according to the first power, the first SOC value and the second SOC value.

In accordance with a third aspect, the present application provides a master controller, including: a memory; and a processor coupled to the memory. The processor is configured to perform the method in the first aspect based on an instruction stored in the memory.

In an optional manner, the master controller includes a vehicle controller, a low-voltage battery controller, a logic controller of a bidirectional DC/DC module, and a high-voltage battery controller. The vehicle controller is configured to control the low-voltage battery controller, the logic controller of the bidirectional DC/DC module and the high-voltage battery controller. The low-voltage battery controller is configured to control the charge-and-discharge process of the low-voltage battery. The logic controller of the bidirectional DC/DC module is configured to control the bidirectional DC/DC module. The high-voltage battery controller is configured to control the charge-and-discharge process of the high-voltage battery.

In accordance with a fourth aspect, the present application provides a battery system, including: a low-voltage battery, a high-voltage battery, a bidirectional DC/DC module, and the master controller as in the third aspect. The master controller is respectively connected with the low-voltage battery, the high-voltage battery and the bidirectional DC/DC module.

In accordance with a fifth aspect, the present application provides an electric vehicle which includes the battery system as in the fourth aspect.

In accordance with a sixth aspect, the present application provides a computer-readable storage medium in which a computer-executable instruction is stored. The computer-executable instruction is configured as a procedure of the method in the first aspect.

Beneficial effects of the present application include that: in the method for charging and discharging the battery system provided by the present application, the first power of the load when the load is in operation, the first SOC value of the low-voltage battery and the second SOC value of the high-voltage battery are first obtained. Then, charge-and-discharge processes of the high-voltage battery and the low-voltage battery are controlled according to the first power, the first SOC value and the second SOC value. By detecting the first SOC value of the low-voltage battery and the second SOC value of the high-voltage battery in real time, the current statues of the low-voltage battery and the high-voltage battery can be obtained in real time. Then, by controlling the charge-and-discharge processes of the high-voltage battery and the low-voltage battery according to the current statuses of the low-voltage battery and the high-voltage battery, the abnormal discharges of the high-voltage battery and the low-voltage battery can be avoided, thereby prolonging the service life of the high-voltage battery and the low-voltage battery. Meanwhile, by further combining with the first power required for load to operate, the battery that meets the requirement of the load demand can be selected according to the current statuses of the low-voltage battery and the high-voltage battery, which is not only conducive to improving the stability of the load during operation, but also enables the performance of the low-voltage battery and the high-voltage battery to be more fully-utilized, thereby improving the endurance of the low-voltage battery and the high-voltage battery.

### BRIEF DESCRIPTION OF DRAWINGS

In order to illustrate technical solutions of the embodiment of the present application more clearly, the drawings that need to be used in the embodiments of the present application will be briefly introduced below. It would be obvious that the drawings described below are only some implementations of the present application. For those of ordinary skill in the art, other drawings may also be obtained based on these drawings on the premise of paying no creative efforts.
FIG. 1 is a schematic structural diagram of an electric vehicle disclosed in an embodiment of the present application;
FIG. 2 is a flowchart of a method for charging and discharging a battery system disclosed in an embodiment of the present application;
FIG. 3 is a flowchart of a method for charging and discharging a battery system disclosed in another embodiment of the present application;
FIG. 4 is a schematic structural diagram of a device for charging and discharging a battery system disclosed in an embodiment of the present application; and
FIG. 5 is a schematic structural view of a master controller disclosed in an embodiment of the present application.

In the drawings, the above figures may not be drawn according to actual scale.

### DETAILED DESCRIPTION OF EMBODIMENTS

Implementations of the present application will be further described in detail below in conjunction with the drawings and embodiments. The following detailed description of the embodiments and drawings are used to illustrate the principles of the present application, and are not intended to limit the scope of the present application, that is, the present application is not limited to the embodiments described here.

In the description of the present application, it should be noted that, unless otherwise specified, the phrase "a/the plurality of" means more than two; the terms, such as "upper", "lower", "left", "right", "inner ", "outside", etc., indicated orientations or positional relationships are only for the convenience of describing the present application and simplifying the description, and do not indicate or imply that the device or element referred to must have a specific orientation, be constructed and operated in a specific orientation, and therefore should not be understood as a limitation of the present application. In addition, the terms "first", "second", "third", etc. are used for descriptive purposes only and should not be construed as indicating or implying relative importance. The term "vertical" is not strictly vertical, but within the allowable range of error. The term "parallel" is not strictly parallel, but within the allowable range of error.

The orientation words appearing in the following description are based on the directions shown in the figures, and are not intended to limit a specific structure of the present application. In the description of the present application, it should also be noted that, unless otherwise expressly specified and limited, the terms "installation", "in connection with", and "connected to/with" should be interpreted in a broad sense, for example, it may be a fixed connection, a detachable connection, or an integral connection; it may also be directly connected or indirectly connected through an intermediary. For those of ordinary skills in the art, the specific meanings of the above terms in the present application can be understood according to specific circumstances.

Lithium-ion batteries have the advantages of high monomer voltage, large specific energy, and long cycle life. Therefore, lithium-ion batteries are widely used in fields such as electric vehicles, consumer electronics, and energy storage systems. Among them, lithium-ion batteries in the electric vehicle generally include low-voltage batteries and high-voltage batteries.

Currently, an electric vehicle generally includes low-voltage loads and high-voltage loads. In the electric vehicle, the low-voltage loads may be powered by the high-voltage battery after being stepped down, or may be directly powered by the low-voltage battery.

It is noted by inventors of the present application in a process of realizing the present application that: in the related arts, when a low-voltage load needs to be powered, for the two modes of being powered by a low-voltage battery and being powered by a high-voltage battery after being stepped down, an output mode of competitive power supply is usually adopted. Specifically, a comparison of a voltage of the high-voltage battery after being stepped down and a voltage of the low-voltage battery is performed, and the one having a higher voltage is selected to supply power to the low-voltage load. In addition, if the low-voltage battery is insufficient after the low-voltage battery supplies power to an external load, then the low-voltage battery needs to be charged by the high-voltage battery.

However, this power supply mode does not take into account the actual situation of the high-voltage battery and the low-voltage battery, resulting in the risk of damage to the high-voltage battery and the low-voltage battery due to overcharge or over-discharge.

Based on this, the applicant has designed a method for charging and discharging a battery system. In this method, charge-and-discharge processes of the high-voltage battery and the low-voltage battery are controlled according to a first power of a load when the load is in operation, a first state of charge (State Of Charge, SOC) value of the low-voltage battery and a second SOC value of the high-voltage battery. Then, the charge-and-discharge processes of the high-voltage battery and the low-voltage battery can be controlled according to current statuses of the low-voltage battery and the high-voltage battery, which is conducive to avoiding the risk of overcharging or over-discharging of the high-voltage battery and the low-voltage battery, thereby prolonging the service life of the high-voltage battery and the low-voltage battery. At the same time, it is also possible to select a battery that meets the requirement of the load according to the current statuses of the low-voltage battery and the high-voltage battery, which not only can improve the stability of the load operation, but also enables the performance of the low-voltage battery and high-voltage battery to be more fully-utilized. Meanwhile, it is beneficial to increase the available power of the low-voltage battery and the high-voltage battery when the battery system is applied to an electric vehicle, so as to improve an endurance of the vehicle.

An embodiment of the present application provides an electrical device using a low-voltage battery and a high-voltage battery as a power source, where the low-voltage battery and the high-voltage battery respectively includes at least one battery cell. The electrical device may be, but not limited to, a mobile phone, a tablet, a laptop, an electric toy, an electric tool, a battery car, an electric vehicle, a ship, a spacecraft, etc. Among them, the electric toy may include a fixed or mobile electric toy, such as a game console, an electric car toy, an electric boat toy, an electric airplane toy, etc., and the spacecraft may include an airplane, a rocket, a space shuttle, a spaceship, etc.

In the following embodiments, for the convenience of description, an electric vehicle 10 is taken as an example of an electric device according to an embodiment of the present application.

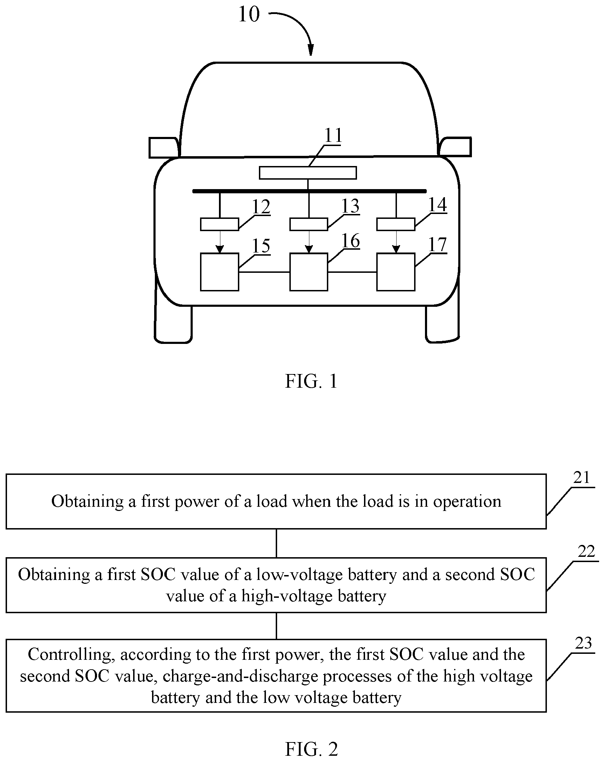

Referring to FIG. 1, FIG. 1 is a schematic structural diagram of an electric vehicle provided by some embodiments of the present application. The electric vehicle 10 may be a fuel vehicle, a gas vehicle or a new energy vehicle, and the new energy vehicle may be a pure electric vehicle, a hybrid vehicle or an extended-range vehicle. The interior of the electric vehicle 10 is provided with a battery system. The battery system includes a vehicle controller 11, a high-voltage battery controller 12, a logic controller 13 of a bidirectional DC/DC module, a low-voltage battery controller 14, a high-voltage battery 15, the bidirectional DC/DC module 16 and a low-voltage battery 17. The bidirectional DC/DC module 16 is connected between the high-voltage battery 15 and the low-voltage battery 17 for realizing charge-and-discharge processes between the high-voltage battery 15 and the low-voltage battery 17.

In this embodiment, the high-voltage battery 15 and the low-voltage battery 17 both include at least one battery cell. The battery cell is configured for charging or discharging, and may be recharged repeatedly in a rechargeable manner. The high-voltage battery 15 generally refers to a battery that is capable of providing a voltage above 48V, and the low-voltage battery 17 generally refers to a battery that is capable of providing a voltage within 48V (including 48V). The high-voltage battery 15 may be configured for a supplying power to the high-voltage loads in the vehicle, and the low-voltage battery 17 may be used for supplying power to the low-voltage loads in the vehicle. For example, the high-voltage battery 15 may be used as a power source for an air conditioner in the vehicle, and the low-voltage battery 17 may be used as a power source for an indicator light in the vehicle.

The vehicle controller 11 is respectively connected with the high-voltage battery controller 12, the logic controller 13 of the bidirectional DC/DC module, and the low-voltage battery controller 14 via communication lines. The vehicle controller 11 may send an operation instruction to the high-voltage battery controller 12, the logic controller 13 of the bidirectional DC/DC module, and the low-voltage battery controller 14, or receive an operation instruction uploaded by the high-voltage battery controller 12 and the logic controller 13 of the bidirectional DC/DC module, and the low-voltage battery controller 14. The high-voltage battery controller 12 is configured to control the charge-and-discharge process of the high-voltage battery 15. The low-voltage battery controller 14 is configured to control the charge-and-discharge process of the low-voltage battery 17. The logic controller 13 of the bidirectional DC/DC module is configured to control the bidirectional DC/DC module 16 to enable the high-voltage battery 15 to charge the low-voltage battery 17 or to enable the low-voltage battery 17 to charge the high-voltage battery 15.

It should be noted that FIG. 1 is merely an exemplary illustration of the high-voltage battery 15 and the low-voltage battery 17. In other embodiments, the high-voltage battery 15 and the low-voltage battery 17 may also include more or less elements, or have different element configurations, which are not limited in this embodiment of the present application. For example, the high-voltage battery 15 and the low-voltage battery 17 in the embodiment of the present application may be lithium-ion batteries, lithium metal batteries, lead-acid batteries, nickel-cadmium batteries, nickel-metal hydride batteries, lithium-sulfur batteries, lithium-air batteries or sodium-ion batteries, etc., which is not limited here. In terms of scale, the high-voltage battery 15 or the low-voltage battery 17 in the embodiment of the present application may be a single cell, or a battery module composed of multiple battery cells connected in series and/or in parallel, or may be a battery pack composed of multiple battery modules connected in series and/or in parallel, and may also be a power supply device composed of multiple battery packs connected in parallel, which is not limited here. In terms of application scenarios, the high-voltage battery 15 and the low-voltage battery 17 may be used in power devices such as automobiles and ships. For example, the high-voltage battery and the low-voltage battery may be applied to an electric vehicle, to supply power to a motor of the electric vehicle, as a power source of the electric vehicle. The battery may also supply power to other electrical devices in the electric vehicle, such as an in-car air conditioner, a car player, etc.

Meanwhile, a hardware structure of the electric vehicle 10 as shown in FIG 1 is only an example, and the electric vehicle 10 may have more or fewer components than shown in FIG. 1, may combine two or more components, or may have different component configurations. The various components shown may be implemented in hardware, software, or a combination of hardware and software that includes one or more signal processing and/or application specific integrated circuits.

As an example, in one embodiment, the low-voltage battery controller 14 may be integrated with the logic controller 13 of the bidirectional DC/DC module, and meanwhile, the high-voltage battery controller 12 is integrated into the vehicle controller 11, that is, the charge-and-discharge process of the high-voltage battery 15 is controlled by the vehicle controller 11.

As another example, in another embodiment, the logic controller 13 of the bidirectional DC/DC module and the low-voltage battery controller 14 may be integrated into the vehicle controller 11, while the charge-and-discharge process of the high-voltage battery 15 is still controlled by the high-voltage battery controller 12.

As another example, in yet another embodiment, the high-voltage battery controller 12, the logic controller 13 of the bidirectional DC/DC module, and the low-voltage battery controller 14 are all integrated into the vehicle controller 11. Then, the vehicle controller 11, the high-voltage battery controller 12, the logic controller 13 of the bidirectional DC/DC module, and the low-voltage battery controller 14 may be collectively referred to as a master controller. The master controller may perform functions of the vehicle controller 11, the high-voltage battery controller 12, the logic controller 13 of the bidirectional DC/DC module, and the low-voltage battery controller 14, so as to calibrate a status of the low-voltage battery 17, that is, to calibrate a health state value of the low-voltage battery 17.

Referring to FIG. 2, FIG. 2 is a flowchart of a method for charging and discharging a battery system provided by an embodiment of the present application. Here, the battery system includes a low-voltage battery and a high-voltage battery, and the high-voltage battery and the low-voltage battery are both configured to be connected with a load. The method of charging and discharging the battery system includes the following steps 21 to 23.

In step 21: a first power of a load when the load is in operation is obtained.

In this embodiment, the first power is an actual power of the load during operation, and may also be a power consumed when the load is in operation.

It can be understood that, in this embodiment, the load here mainly refers to a low-voltage load, that is, a load directly connected to a low-voltage battery, that can be directly powered by the low-voltage battery. However, if a high-voltage battery is required, the voltage of the high-voltage battery needs to be stepped down before supplying power to the load, so as to prevent the load from being damaged due to over-voltage.

In step 22: a first SOC value of a low-voltage battery and a second SOC value of a high-voltage battery are obtained.

In this embodiment, the SOC value is a ratio of a remaining power of the battery to a nominal capacity of the battery. Those skilled in the art can understand that the SOC (state of charge, state of charge) value of the battery may be a ratio of a remaining charge of the battery to the nominal capacity of the battery, or may be a ratio of the remaining charge of the battery to a current nominal capacity of the battery. The nominal capacity of the battery may be a preset fixed value (such as a value determined by a battery manufacturer when the battery leaves the factory), or may be a sum of the remaining charge of the battery and an amount of electricity that the battery has discharged. The embodiments of the present disclosure do not limit how to determine the SOC of the battery, and any conventional or future implementations of determining the SOC of the battery may be applied to one or more embodiments of the present disclosure.

The first SOC value is the SOC value of the low-voltage battery detected in real time, and the second SOC value is the SOC value of the high-voltage battery detected in real time.

In step 23: a charge-and-discharge processes of the high-voltage battery and the low-voltage battery is controlled according to the first power, the first SOC value and the second SOC value.

In this embodiment, through a real-time detection on the first SOC value of the low-voltage battery and the second SOC value of the high-voltage battery, current statuses of the low-voltage battery and the high-voltage battery can be obtained in real time. Then, the charge-and-discharge processes of the high-voltage battery and the low-voltage battery can be controlled according to the current statuses of the low-voltage battery and the high-voltage battery, which is conducive to avoiding the risk of overcharging or over-discharging of the high voltage battery and the low voltage battery, so as to prolong the service life of the high voltage battery and the low voltage battery.

Secondly, by further considering the first power required when the load is in operation, the battery that meets the requirement of the load can be selected according to the current statuses of the low-voltage battery and the high-voltage battery. In this way, it not only can improve the stability of the load during operation, but also enables the performance of the low-voltage battery and the high-voltage battery to be more fully-utilized, that is, it is beneficial to improve the available power of the low-voltage battery and the high-voltage battery, and the endurance of electric vehicles is stronger when the battery system is applied to the electric vehicle.

It can be seen that, compared to the output mode of competitive power supply used in the related arts, the scheme of the present application provides a more reasonable mode for selection, which can improve a power-supply efficiency of the low-voltage battery and the high-voltage battery while reducing the risk of overcharging or over-discharging of the high-voltage battery and the low-voltage battery.

In one embodiment, a specific implementation process of step 23 includes that: if a maximum power output by the low-voltage battery is smaller than the first power, then the high-voltage battery is controlled to discharge for the load, or the high-voltage battery and the low-voltage battery are controlled to discharge simultaneously for the load.

Here, the maximum power output by the low-voltage battery is the maximum power that the low-voltage battery can provide. If the maximum power output by the low-voltage battery is smaller than the first power required for the load to operate, it is indicated that the low-voltage battery is unable supply power to the load alone. At this time, the power supply of the load should be switched to the high-voltage battery after being stepped down, or the high-voltage battery after being stepped down together with the low-voltage battery are used to power the load. Thus, a voltage and a current required for the load during operation can be obtained, and a normal operation of the load can be maintained, which is conducive to maintaining the stability of the load during operation, and obviously, the risk of over-discharging of the low-voltage battery can also be reduced to a certain extent.

It can be understood that, for the scheme of using the high-voltage battery after stepping down to supply power to the load together with the low-voltage battery, it may be further required to control a discharge process of the low-voltage battery, so as to avoid the over-discharge of the low-voltage battery. Specifically, in one embodiment, if the obtained first SOC value of the low-voltage battery is smaller than or equal to a first SOC threshold, then the low-voltage voltage is controlled to stop discharging for the load.

Here, the first SOC threshold may be set according to actual application situations, and will not be specifically limited in the embodiment of the present application. For example, in one embodiment, the first SOC value may be set as a SOC value corresponding to a cut-off voltage of the low-voltage battery in a discharging process. In other words, when the low-voltage battery is discharged to be lower than or equal to the cut-off voltage, it is determined that the low-voltage battery is in an over-discharge state. In this case, as long as it is noticed that the first SOC value of the low-voltage battery is smaller than or equal to the first SOC threshold of the low-voltage battery during the discharge process, an output of electric energy by the low-voltage battery will be stopped immediately. Therefore, the risk of over-discharging of the low-voltage battery can be reduced, which has a function of protecting the low-voltage battery, and is beneficial to prolong the service life of the low-voltage battery.

In one embodiment, the specific implementation process of step 23 also includes that: if the maximum output power of the low-voltage battery is greater than or equal to the first power, then the low-voltage battery is controlled to discharge for the load. The charge-and-discharge processes of the high-voltage battery and the low-voltage battery is controlled according to the first SOC value and the second SOC value.

It can be determined that the discharge process of the battery may be mainly divided into three phases according to the OCV-SOC curve during the discharge process of the battery. A first phase is a phase where the voltage drops rapidly, a second phase is a phase where the voltage changes slowly, and a third phase is a phase where the voltage is nearly discharged. Among them, when the battery is in the second phase, the battery is operated in a platform area, and the voltage of the battery is relatively stable at this time. Therefore, the battery, during use, should be maintained in the platform area as much as possible.

Thus, in case that the maximum power output by the low-voltage battery is greater than or equal to the first power, the low-voltage battery is able to meet the power-supply requirement of the load, then the load should be powered by the low-voltage battery to provide the load a more stable voltage, which is conducive to improving stability of load during operation.

In conclusion, when the high-voltage battery and the low-voltage battery can both meet the power-supply requirement of the load, the low-voltage battery should be selected in priority, which is conducive to a higher efficiency. Therefore, in this embodiment, it is more efficient to control the low-voltage battery to discharge for the load when the maximum output power of the low-voltage battery is greater than or equal to the first power.

In another embodiment, the specific implementation process of step 23 also includes that: if the first SOC value is greater than a second SOC threshold, and the first SOC value is smaller than or equal to a third SOC threshold, then the low-voltage battery is controlled to discharge for the load.

Here, the second SOC threshold and the third SOC threshold may be set according to actual application situations, and will not be specifically limited in the embodiment of the present application.

For example, in one embodiment, any value from (0, 30%) may be used as the second SOC threshold, and any data in (70%, 100%) may be used as the third SOC threshold.

As another example, in another embodiment, the second SOC threshold may be set as the SOC value corresponding to the cut-off voltage of the low-voltage battery in the discharge process, and the third SOC threshold may be set as a SOC value corresponding to the maximum voltage of the low-voltage battery in a charge process. At this time, in this embodiment, the abnormality of over-discharge or overcharge of the low-voltage battery can be avoided by detecting in real time to maintain that the first SOC value is greater than the second SOC value and is smaller than or equal to the third SOC value. In other words, the battery is maintained in a state of shallow charge and shallow discharge, which is conducive to the service life of the low-voltage battery. Meanwhile, in this case, if the low-voltage battery is used to supply power to the load, the stability and efficiency of the entire power supply process can be higher.

It would be obvious that, in this case, if the current of the high-voltage battery is insufficient, the voltage of the low-voltage battery may also be boosted to charge the high-voltage battery, to enable the high-voltage battery to remain as a power supply for the high-voltage load, so as to maintain a normal operation of the high-voltage load.

In one implementation, the specific implementation process of step 23 also includes that: if the first SOC value is smaller than or equal to the second SOC threshold, and the second SOC value is greater than a fourth SOC threshold, then the high-voltage battery is controlled to discharge for the load. And the high-voltage battery is controlled to charge the low-voltage battery until the SOC value of the low-voltage battery reaches the third SOC threshold.

Here, the fourth SOC threshold may be set according to actual application situations, and will not be specifically limited in the embodiment of the present application. For example, in one embodiment, the second SOC threshold may be set as the SOC value corresponding to the cut-off voltage of the high-voltage battery in the discharge process. In other words, when it is detected in real time that the high-voltage battery is discharged until the second SOC value of the high-voltage battery is smaller than or equal to the SOC value corresponding to the cut-off voltage, then it is determined that the low-voltage battery is in an over-discharge state. Conversely, if it is detected in real time that the second SOC value of the high-voltage battery is greater than the SOC value corresponding to the cut-off voltage, then it is determined that the high-voltage battery has sufficient power, and thus can not only be used to charge the battery but also can be used to supply power to the load.

In this embodiment, as the low-voltage battery supplies power to the load, the electric energy of the low-voltage battery decreases, that is, the detected first SOC value of the low-voltage battery also decreases. Then, when the first SOC value of the low-voltage battery is decreased to be smaller than or equal to the second SOC threshold, if the second SOC value of the high-voltage battery is greater than the fourth SOC threshold, that is, the high-voltage battery has relatively sufficient power. On the one hand, the power supply of the load is switched from the low-voltage battery to the high-voltage battery to maintain the normal operation of the load. On the other hand, the low-voltage battery is charged by the high-voltage battery simultaneously, until the SOC value of the low-voltage battery is increased to the third SOC threshold, and then the power supply of the load is switched again to the low-voltage battery to improve the efficiency.

In one embodiment, the specific implementation process of step 23 also includes that: if the first SOC value is smaller than or equal to the second SOC threshold, and the second SOC value is smaller than or equal to the fourth SOC threshold, then a prompt for charging the high-voltage battery and the low-voltage battery is output.

In the discharge process of the low-voltage battery, when the first SOC value of the low-voltage battery is decreased to be smaller than or equal to the second SOC threshold, if the second SOC value of the high-voltage battery is smaller than or equal to the fourth SOC threshold, then the high-voltage battery and the low-voltage battery both have the risk of being over-discharged. At this time, the low-voltage battery and the high-voltage battery should first stop outputting electric energy, and meanwhile, a prompt for charging the high-voltage battery and the low-voltage battery should be output, so that the user can take corresponding measures in time, for example, the high-voltage battery and the low-voltage battery are charged by a charging device such as a charging pile. Thereby, the abnormal situation of over-discharging caused by the user's misuse of the low-voltage battery or high-voltage battery when the low-voltage battery and the high-voltage battery are insufficient can be avoided, which can further reduce the risk of over-discharging of the high-voltage battery and the low-voltage battery, and prolong the service life of the high-voltage battery and the low-voltage battery.

In one embodiment, the method of charging and discharging the battery system also includes a step of: controlling the low-voltage battery to discharge for the load upon receiving a high-voltage power-down signal.

Here, the high-voltage power-down signal is a signal output when the high-voltage battery is powered down. At this time, the high-voltage battery may no longer be able to supply power due to abnormalities such as battery loss. In this case, the voltage of the low-voltage battery may be boosted to temporarily supply power to the high-voltage load.

Then, when the battery system is applied to an electric vehicle, the battery system can keep the electric vehicle powered for a short time, to assist the user to drive the electric vehicle to avoid obstacles during operation, or to drive the electric vehicle to a safety place waiting for a rescue, which not only brings convenience to users, but also improves the safety of the electric vehicle.

In one embodiment, the battery system also includes the bidirectional DC/DC module. The bidirectional DC/DC module is respectively connected to the high-voltage battery and the low-voltage battery. Here, for the structure of the battery system, reference may be made to the above detailed description of FIG. 1, which will not be repeated here.

The method of charging and discharging the battery system also includes a step of: controlling the bidirectional DC/DC module, to enable the high-voltage battery to charge the low-voltage battery, or enable the low-voltage battery to charge the high-voltage battery, or enable the high-voltage battery to discharge for the load.

By arranging the bidirectional DC/DC module, multiple different power transmission processes can be realized, including that the low-voltage battery is charged by the high-voltage battery after the voltage of the high-voltage battery is stepped down, the high-voltage battery is charged by the low-voltage battery after the voltage of the low-voltage battery is boosted, and the load is power by the high-voltage battery after the voltage of the high-voltage battery is stepped down. Then, the power transmission process can be flexibly selected according to the current statuses of the low-voltage battery, the high-voltage battery and the load, so that the low-voltage battery and high-voltage battery are enabled to remain at a better state, respectively, which is beneficial to prolong the service life of the low-voltage battery and high-voltage battery.

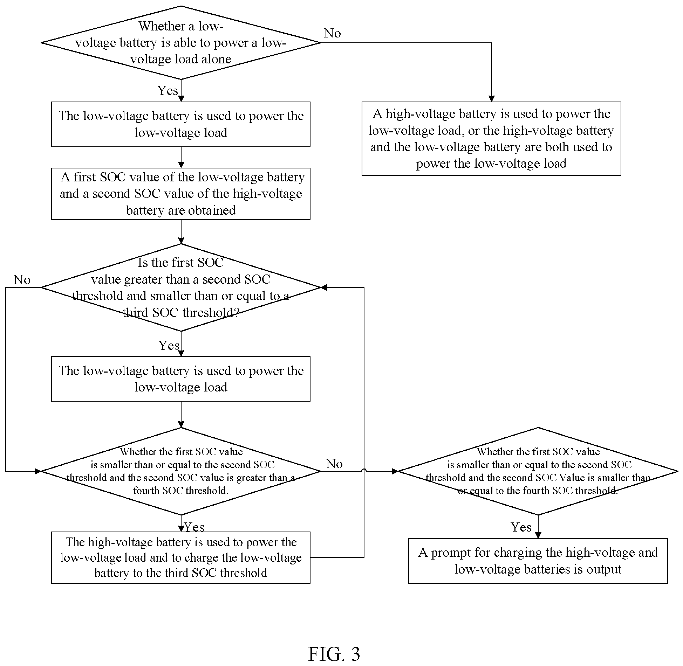

In an embodiment, referring to FIG. 3, which is a flowchart of a method of charging and discharging a battery system provided in another embodiment of the present application.

As shown in FIG. 3, firstly, it is determined whether the low-voltage load can be powered by the low-voltage battery alone, specifically it may be determined by comparing whether the maximum power output by the low-voltage battery can be matched with the first power required by the low-voltage load. If the maximum power output by the low-voltage battery can be matched with the first power required by the low-voltage load, then is is determined that the low-voltage battery is able to power the low-voltage load alone. If the maximum power output by the low-voltage battery cannot be matched with the first power required by the low-voltage load, then it is determined that the low-voltage battery is unable to power the low-voltage load alone.

Then, if the low-voltage battery is unable to power the low-voltage load alone, then the high-voltage battery after stepping down is used to power the low-voltage load, or alternatively, the high-voltage battery after stepping down and the low-voltage battery are both used to supply power for the low-voltage load. If the low-voltage battery is able to power the low-voltage load alone, then the low-voltage battery is used in priority to power the low-voltage load, meanwhile, the first SOC value of the low-voltage battery and the second SOC value of the high-voltage battery are obtained. It can be understood that, during the discharge process of the low-voltage battery, if the first SOC value of the low-voltage battery is smaller than the first SOC threshold, then the low-voltage battery is controlled to stop supplying power.

Then, after the low-voltage battery is used to supply power for the low-voltage load, if the first SOC value is greater than the second SOC value, and the first SOC value is smaller than or equal to the third SOC value, then it is still maintained that the low-voltage battery is used to supply power for the low-voltage load. Until the first SOC value is smaller than or equal to the second SOC threshold, the low-voltage battery is controlled to stop supplying power to the low-voltage load.

In this case, it is further determined whether the second SOC value is greater than the fourth SOC threshold. If the second SOC value is greater than the fourth SOC value threshold, then the high-voltage battery after being stepped down is used to supply power for the low-voltage load, and simultaneously, the high-voltage battery after being stepped down is used to charge the low-voltage battery until the SOC value of the low-voltage battery reaches the third SOC threshold. And if the second SOC value is smaller than or equal to the fourth SOC threshold, the power supply of the low-voltage battery and the high-voltage battery are both stopped, and the prompt for charging the high-voltage battery and the low-voltage battery is output.

In this embodiment, detections on the first SOC value of the low-voltage battery and the second SOC value of the high-voltage battery can be implemented to determine the statuses of the high-voltage battery and the low-voltage battery. And the charge-and-discharge processes of the high-voltage battery and the low-voltage battery can be controlled according to the status of the high-voltage battery and the low-voltage battery, which is conducive to avoiding the abnormal overcharge or over-discharge of the high-voltage battery and the low-voltage battery, thereby prolonging the service life of the high-voltage battery and the low-voltage battery. Meanwhile, the battery that can meet the requirement of the load is selected according to the current statuses of the low-voltage battery and high-voltage battery, which not only can provide the load with the required voltage and current to maintain the stability of the load, but also enables the performances of the low-voltage battery and high-voltage battery to be more fully-utilized, and the available power of the low-voltage battery and the high-voltage battery is improved.

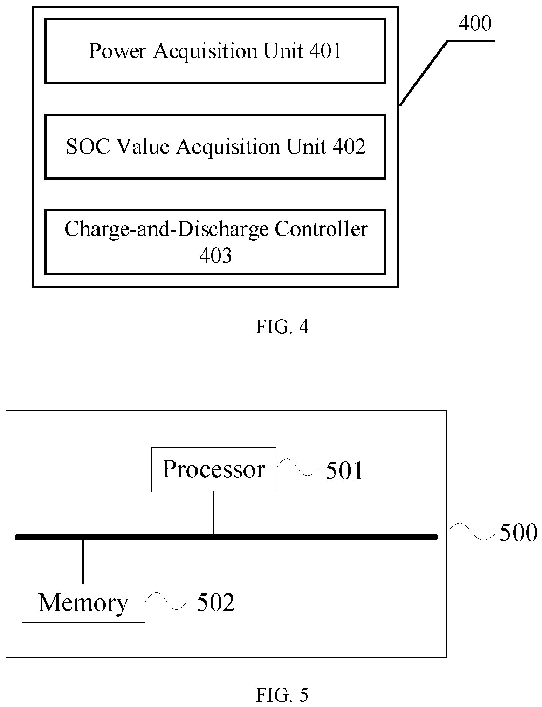

Referring to FIG. 4, which shows a schematic structural diagram of a device for charging and discharging a battery system provided by an embodiment of the present application. In this embodiment, the battery system includes a low-voltage battery and a high-voltage battery, where the high-voltage battery and the low-voltage battery are both configured to be connected with a load. The device 400 for charging and discharging the battery system includes: a power acquisition unit 401, an SOC value acquisition unit 402 and a charge-and-discharge controller 403.

The power acquisition unit 401 is configured to obtain a first power of the load when the load is in operation.

The SOC value acquisition unit 402 is configured to obtain a first SOC value of a low-voltage battery and a second SOC value of a high-voltage battery.

The charge-and-discharge controller 403 is configured to control charge-and-discharge processes of the high-voltage battery and the low-voltage battery according to the first power, the first SOC value and the second SOC value.

The above-mentioned product may execute the method provided by the embodiment of the present application shown in FIG. 2, and has corresponding functional modules and beneficial effects for executing the method. For technical details that are not described in detail in this embodiment, references may be made to the method embodiments provided by the present application.

Referring to FIG. 5, which shows a schematic structural diagram of a master controller provided by an embodiment of the present application. As shown in FIG. 5, the master controller 500 includes one or more processors 501 and a memory 502. In FIG. 5, one processor 501 is taken as an example.

The processor 501 and the memory 502 may be connected through a bus or in other ways. In FIG. 5, connection through a bus is taken as an example.

The memory 502, as a non-volatile computer-readable storage medium, may be used to store non-volatile software programs, non-volatile computer-executable programs and modules, such as program instructions/modules corresponding to the method (for example, each unit described in FIG. 4 ) for charging and discharging the battery system in the embodiments of the present application. The processor 501 is configured to perform various functional applications and data processing of the device for charging and discharging the battery system by executing the non-volatile software programs, instructions and modules stored in the memory 502, that is, to implement the method for charging and discharging the battery system in the above-mentioned method embodiments and the functions of each unit of the charging device in the above-mentioned device embodiments.

The memory 502 may include a high-speed random-access memory, and may also include a non-volatile memory, such as at least one magnetic disk storage device, a flash memory device, or other non-volatile solid-state storage devices. In some embodiments, the memory 502 may optionally include a memory that is remotely located relative to the processor 501, and these remote memories may be connected to the processor 501 through a network. Examples of the aforementioned networks include, but are not limited to, the Internet, intranets, local area networks, mobile communication networks, or combinations thereof.

The program instructions/modules are stored in the memory 502, and when executed by the one or more processors 501, the method for charging and discharging the battery system in any of the above method embodiments is performed, for example, the above-described various steps shown in FIG. 2 and FIG. 3 are performed; and also, the functions of the various units described in FIG. 4 may be realized.

In one embodiment, the master controller includes a vehicle controller, a low-voltage battery controller, a logic controller of a bidirectional DC/DC module, and a high-voltage battery controller. Among them, the vehicle controller is configured to control the low-voltage battery controller, the logic controller of the bidirectional DC/DC module and the high-voltage battery controller. The low-voltage battery controller is configured to control the charge-and-discharge process of the low-voltage battery. The logic controller of the bidirectional DC/DC module is configured to control the bidirectional DC/DC module. The high-voltage battery controller is configured to control the charge-and-discharge process of the high-voltage battery. Here, for the structure of the master controller, reference may be made to the above detailed description of FIG. 1, which will not be repeated here.

An embodiment of the present application also provides a battery system, including a low-voltage battery, a high-voltage battery, a bidirectional DC/DC module, and the master controller in any of the above embodiments. The master controller is respectively connected with the low-voltage battery, the high-voltage battery and the bidirectional DC/DC module.

An embodiment of the present application also provides an electric device, including a load and the battery system in any one of the above embodiments, and the battery system is configured to supply power to the load.

An embodiment of the present application also provides a non-volatile computer storage medium, in which a computer-executable instruction is stored, and the computer-executable instruction, when executed by one or more processors, causes the one or more processors to perform the method for charging and discharging the battery system in any of the above method embodiments. For example, the various steps shown in FIG. 2 and FIG. 3 described above are performed; and also, the functions of the various units described in FIG. 4 may be realized.

The above-described device or equipment embodiments are only illustrative, where the unit modules described as separate components may or may not be physically separated, and the components shown as modular units may or may not be a physical unit, that is, it may be located in one place, or it may also be distributed to multiple network module units. Part or all of the modules can be selected according to actual needs to achieve the objective of the scheme of the embodiment.

Through the description of the above embodiments, it could be clearly understood by those skilled in the art that each embodiment may be implemented by means of software and a general hardware platform, and of course also by hardware. Based on this understanding, the essence of the above technical solutions or the part that contributes to related technologies may be embodied in the form of software products, and the computer software products may be stored in computer-readable storage media, such as a ROM/RAM, a disk, an optical disk, etc., including several instructions for a computer device (which may be a personal computer, a server, or a network device, etc.) to execute the methods described in various embodiments or some parts of the embodiments.

Although the present application has been described with reference to some preferred embodiments, various modifications may be made and equivalents may be substituted for parts of the embodiments without departing from the scope of the present application. In particular, as long as no structural conflict is existed, the technical features mentioned in the various embodiments may be combined in any manner. The present application is not limited to the specific embodiments disclosed herein, and all technical solutions falling within the scope of the claims are included by the present application.

## Claims

1. A method for charging and discharging a battery system, wherein the battery system comprises a low-voltage battery and a high-voltage battery, wherein the high-voltage battery and the low-voltage battery are both configured to be connected with a load, and the method comprises:
obtaining a first power of the load when the load is in operation;
obtaining a first SOC value of the low-voltage battery and a second SOC value of the high-voltage battery; and
controlling charge-and-discharge processes of the high-voltage battery and the low-voltage battery according to the first power, the first SOC value and the second SOC value.

2. The method according to claim 1, wherein said controlling the charge-and-discharge processes of the high-voltage battery and the low-voltage battery according to the first power, the first SOC value and the second SOC value comprises:
controlling the high-voltage battery to discharge for the load, or alternatively, controlling the high-voltage battery and the low-voltage battery to discharge simultaneously for the load, if a maximum power output by the low-voltage battery is smaller than the first power.

3. The method according to claim 2, wherein when the high-voltage battery and the low-voltage battery are controlled to discharge simultaneously for the load, and if the first SOC value is smaller than or equal to a first SOC threshold, the low-voltage battery is controlled to stop discharging for the load.

4. The method according to claim 1, wherein said controlling the charge-and-discharge processes of the high-voltage battery and the low-voltage battery according to the first power, the first SOC value and the second SOC value comprises:
controlling the low-voltage battery to discharge for the load if a maximum power output by the low-voltage battery is greater than or equal to the first power; and
controlling the charge-and-discharge processes of the high-voltage battery and the low-voltage battery according to the first SOC value and the second SOC value.

5. The method according to claim 4, wherein said controlling the charge-and-discharge processes of the high-voltage battery and the low-voltage battery according to the first SOC value and the second SOC value comprises:
controlling the low-voltage battery to discharge for the load if the first SOC value is greater than a second SOC threshold and the first SOC value is smaller than or equal to a third SOC threshold.

6. The method according to claim 5, wherein said controlling the charge-and-discharge processes of the high-voltage battery and the low-voltage battery according to the first SOC value and the second SOC value further comprises:
controlling the high-voltage battery to discharge for the load if the first SOC value is smaller than or equal to the second SOC threshold, and the second SOC value is greater than a fourth SOC threshold; and
controlling the high-voltage battery to charge the low-voltage battery until a SOC value of the low-voltage battery reaches the third SOC threshold.

7. The method according to claim 5, wherein said controlling the charge-and-discharge processes of the high-voltage battery and the low-voltage battery according to the first SOC value and the second SOC value further comprises:
outputting a prompt for charging the high-voltage battery and the low-voltage battery if the first SOC value is smaller than or equal to the second SOC threshold and the second SOC value is smaller than or equal to the fourth SOC threshold.

8. The method of claim 1, wherein the method further comprises:
controlling the low-voltage battery to discharge for the load upon receiving a high-voltage power-down signal.

9. The method according to any one of claims 1-8, wherein the battery system further comprises a bidirectional DC/DC module, the bidirectional DC/DC module is respectively connected with the high-voltage battery and the low-voltage battery, and the method further comprises:
controlling the bidirectional DC/DC module to enable the high-voltage battery to charge the low-voltage battery, or enable the low-voltage battery to charge the high-voltage battery, or enable the high-voltage battery to discharge for the load.

10. A device for charging and discharging a battery system, wherein the battery system comprises a low-voltage battery and a high-voltage battery, wherein the high-voltage battery and the low-voltage battery are both configured to be connected with a load, and the device comprises:
a power acquisition unit, configured to obtain a first power of the load when the load is in operation;
an SOC value acquisition unit, configured to obtain a first SOC value of the low-voltage battery and a second SOC value of the high-voltage battery; and
a charge-and-discharge controller, configured to control charge-and-discharge processes of the high-voltage battery and the low-voltage battery according to the first power, the first SOC value and the second SOC value.

11. A master controller, comprising:
a memory; and
a processor, coupled to the memory, wherein the processor is configured to perform the method according to any one of claims 1 to 9 based on an instruction stored in the memory.

12. The master controller according to claim 11, wherein the master controller comprises a vehicle controller, a low-voltage battery controller, a logic controller of a bidirectional DC/DC module, and a high-voltage battery controller;
the vehicle controller is configured to control the low-voltage battery controller, the logic controller of the bidirectional DC/DC module and the high-voltage battery controller, the low-voltage battery controller is configured to control a charge-and-discharge process of the low-voltage battery, the logic controller of the bidirectional DC/DC module is configured to control the bidirectional DC/DC module, and a high-voltage battery controller is configured to control the charge-and-discharge process of the high-voltage battery.

13. A battery system, comprising:
a low-voltage battery;
a high-voltage battery;
a bidirectional DC/DC module; and
the master controller according to claim 11 or 12, wherein the master controller is respectively connected with the low-voltage battery, the high-voltage battery and the bidirectional DC/DC module.

14. An electric vehicle, comprising:
the load; and
the battery system according to claim 13, wherein the battery system is configured to supply power to the load.

15. A computer-readable storage medium, comprising: a computer-executable instruction stored in the computer-readable storage medium, wherein the computer-executable instruction is configured as a procedure of the method according to any one of claims 1 to 9.
